(19) Europäisches Patentamt / European Patent Office / Office européen des brevets

(11) **EP 1 895 287 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(51) Int Cl.:
***G01N 1/30*** *(2006.01)*

(21) Anmeldenummer: **07016952.9**

(22) Anmeldetag: **29.08.2007**

(54) **Verwendung von Hexamethylentetramin zum Fixieren von biologischen Materialien**

Use of hexamethylenetetramine for fixing biological materials

Utilisation de hexaméthylènetétramine pour la fixation de matériaux biologiques

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.08.2006 DE 102006040315**

(43) Veröffentlichungstag der Anmeldung:
**05.03.2008 Patentblatt 2008/10**

(73) Patentinhaber: **Biosepar -Gesellschaft für Medizin- und Labortechnik mbH 82031 Grünwald (DE)**

(72) Erfinder:
• **Szabados, Andreas**
  **82031 Grünwald (DE)**
• **Gerigk, Roberto**
  **84453 Mühldorf / Inn (DE)**

(74) Vertreter: **von Bülow, Tam Patentanwaltskanzlei Rotbuchenstrasse 6 81547 München (DE)**

(56) Entgegenhaltungen:
**WO-A2-2004/083369     GB-A- 1 440 283**

• **ROEMPP ONLINE: "Hexamethylentetramin" [Online] Februar 2005 (2005-02), GEORG THIEME-VERLAG , XP002464945 Gefunden im Internet: URL:www.roempp.com/prod/roempp.php> [gefunden am 2008-01-17] * Stichwort: Hexamethylentetramin * * das ganze Dokument ***
• **ROEMPP ONLINE: "Amin-Formaldehyd-Additions- und -Kondensationsprodukte" [Online] Dezember 2007 (2007-12), GEORG THIEME-VERLAG , XP002464946 Gefunden im Internet: URL:www.roempp.com/prod/roempp.php> [gefunden am 2008-01-17] * Stichwort: Amin-Formaldehyd-Additions- und -Kondensationsprodukte * * das ganze Dokument ***

**EP 1 895 287 B1**

**Beschreibung**

Die Erfindung betrifft die Verwendung von Hexamethylentetramin und einer Säure als Fixativum zum Fixieren von biologischen Materialien, wie z.B. Gewebe, Zellen, Organe und Ausscheidungen von Menschen und Tieren, ferner von Bakterien, Viren, Pilzen und Parasiten sowie biotechnischen Erzeugnissen usw.

Bisher wird als Fixativum überwiegend Formaldehyd (Formalin) eingesetzt, das hervorragende Fixierungseigenschaften auch über längere Zeiträume hat. Aldehyde und insbesondere Formaldehyd gelten aber als hochtoxisch. Es würde als Stoff mit begründetem Verdacht auf Krebs erzeugendes Potential eingestuft und kann Allergien, Haut-, Atemwegs- oder Augenreizungen verursachen. Bei hoher Dosierung kann es sogar akute Lebensgefahr verursachen. Daneben hat es auch einen stechenden, unangenehmen Geruch. Auch aus Umweltschutzgründen wird die Verwendung von Formalin rechtlich eingeschränkt.

Es gibt bereits mehrere Ansätze, ein formalinfreies Fixativum zu schaffen, wie z.B. in der DE 38 22 183 A1 beschrieben, in der Gerbsäure als wesentlicher Bestandteil eines Fixativums vorgeschlagen wird. Die DE 38 24 936 A1 schlägt für eine Schnellfixierung eine Heißwasserwirkung mit einem Adjuvans aus Gerbsäure und einem weiteren Adjuvans mit einem zweiwertigen Alkohol sowie Wasser vor.

Die DE 44 04 544 A1 verzichtet ganz auf chemische Fixativa, wie Formalin, indem physikalische Wärmedenaturierungen in Wasserbädern vorgenommen werden. Diese Art der Fixierung ist aber mit dem Nachteil verbunden, daß sich die morphologischen Strukturen des zu fixierenden Materials ändern können. Beispielsweise können Eiweiße koagulieren. Daher ist dieses Verfahren nicht auf alle Materialien anwendbar.

Generell soll ein Fixativum organische Materialien, wie Gewebe, Zellen, Zellverbände, Viren, Bakterien, Parasiten, Pilze, Stuhl etc., für möglichst lange Zeit nach einer Probenahme in einem stabilen Zustand halten. Der Entnahmezustand der Probe soll also fixiert werden, damit bei späteren Untersuchungen, beispielsweise unter einem Mikroskop, noch der Entnahmezustand vorliegt. Somit soll die morphologische Struktur der Probe erhalten bleiben. Auch dürfen sich weder Bakterien, Pilze noch Viren vermehren oder irgendwelche sonstige störende chemische oder physikalische Vorgänge stattfinden. Zusammengefaßt soll ein Fixativum alle Materialien biologischen Ursprungs für analytische und preparative Zwecke in einem stabilen Zustand halten.

Die oben beschriebenen Ansätze im Stand der Technik zielen darauf, die Verwendung von Formalin vollständig zu vermeiden, indem das Formalin durch nicht-toxische oder wenig gefährliche Stoffe ersetzt wird, die ansonsten aber möglichst die gleich guten Fixierungseigenschaften des Formalins haben sollen.

Aus der Druckschrift "Hexamethylentetramin", Februar 2005 (2005-02), Georg Thieme-Verlag, XP002464945, gefunden im Internet: URL:www.reompp.com/prod/roempp.php und der Druckschrift "Amin-Formaldehyd-Additions- und Kondensationsprodukte", Dezember 2007 (2007-12), Georg Thieme-Verlag, XP002464946, gefunden im Internet: URL: www.roempp.com/prod/roempp.php ist Hexamethylentetramin beschrieben, das in saurer wässriger Lösung stöchiometrisch in Amonium-Ionen und Formaldehyd gespalten wird.

Die GB-A-1,440,283 beschreibt Konservierungsstoffe für Futtermittel bestehend aus Gemischen von Hexamethylentetramin mit organischen Säuren, wobei als organische Säuren Ameisensäure, Essigsäure, Zitronensäure, Weinsäure, Milchsäure, Sorbinsäure und insbesondere Propionsäure vorgeschlagen wird. Das Gemisch soll je äquivalent Hexamethylentetramin 0,8 bis 1,2 äquivalente Säuren enthalten. Dabei wird auf die stark bakterizide und fungizide Wirkung des Gemisches angestellt.

Aufgabe der vorliegenden Erfindung ist es, ein Fixativum der eingangs genannten Art zu schaffen, das die guten Eigenschaften des Formalins aufweist, nicht jedoch die Gefahren von Formalin oder sonstigen Aldehyden mit sich bringt.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung besteht darin, eine Kombination aus Hexamethylentetramin und einer Säure in solcher Menge, daß der pH-Wert des Fixativums auf 3,0 bis 7,0 eingestellt ist, als Fixativum zum Fixieren von biologischen Materialien zu verwenden. Das Hexamethylentetramin wirkt dabei als aldehydfreies und insbesondere formaldehydfreies Depotmittel, das in Anwesenheit der Säure in einer chemischen Reaktion ein Fixiermittel bildet, welches wiederum von dem biologischen Material zu dessen Fixierung verbraucht wird. Das durch die genannte chemische Reaktion entstehende Fixiermittel kann Aldehyde und insbesondere Formaldehyd enthalten. Die chemische Reaktion wird durch positiv geladene Ionen ausgelöst, die von der Säure bereitgestellt werden. Die entstehenden Mengen von Aldehyden und insbesondere Formaldehyd sind so gering, daß eine Gefahr für den Verbraucher oder die Umwelt auszuschließen ist.

Es findet somit eine chemische Gleichgewichtsreaktion statt. Das aus dem Depotmittel durch Reaktion mit der Säure in sehr kleinen Mengen entstehende Fixiermittel wird seinerseits eine chemische Reaktion mit der organischen Substanz eingehen und dabei vollständig verbraucht, so daß kein Fixiermittel austreten kann.

Grundlage ist die folgende chemische Gleichgewichtsreaktion:

$$A \quad \underset{\xleftarrow{\hspace{2cm}}}{\xrightarrow{H+}} \quad B \quad + \Delta \text{ FIXIER-MITTEL}$$

wobei $\Delta$ eine sehr kleine Menge bezeichnen soll.

A ist dabei ein Ausgangsstoff, nämlich das o.g. Depotmittel, B ein bei der Reaktion entstehender zweiter Stoff und das oben erwähnte Fixiermittel, das auch ein Aldehyd, wie Formaldehyd, sein kann.

Die obige Reaktion läuft in beiden Richtungen, so daß eine Gleichgewichtsreaktion stattfindet. Kommt zu dieser Gleichgewichtsreaktion eine Probe aus organischem bzw. biologischem Material dazu, verbraucht sie das in geringen Mengen vorhandene Fixiermittel, was den Gleichgewichtszustand stört und zur Bildung von neuem Fixiermittel führt, was durch nachfolgende Beziehung verdeutlicht wird:

$$A \quad \underset{\xleftarrow{\hspace{2cm}}}{\xrightarrow{H+}} \quad B \quad + \Delta \text{ FIXIER-MITTEL}$$

Probe + $\Delta$ FIXIER-MITTEL $\rightarrow$ Probe + $\Delta$ Fixierte Probe (Fixiermittel wird vollständig verbraucht)

Diese Reaktion läuft so lange, bis die gesamte Probe fixiert ist.

Ein System, das diese Bedingung optimal erfüllt, arbeitet mit einem Poly-Amin gemäß nachfolgendem System:

$$\text{Poly-Amin} \quad \underset{\xleftarrow{\hspace{2cm}}}{\xrightarrow{H+}} \quad \text{Aldehyd} + NH_3$$

$NH_3$ sowie Kondensationsprodukte mit $NH_3$, nämlich Poly-Amine, sind in geringeren Konzentrationen toxisch unbedenklich und in bestimmten Konzentrationen sogar in der Lebensmittelindustrie zugelassen.

Die o.g. Gleichgewichtsreaktion kann durch den PH-Wert eingestellt werden. Bis etwa PH 7,0 sind Poly-Amine stabil. Bei einem PH-Wert kleiner als 7,0 beginnt sich das Gleichgewicht in Richtung Aldehyd + $NH_3$ zu verschieben. In vorteilhafter Weise wird daher der PH-Wert so eingestellt, daß sich gerade minimale Mengen von Aldehyd bilden. Der Bereich des PH-Wertes liegt hierfür im Bereich von PH 1,0-7,0, bevorzugt bei 3,5-7,0 und noch bevorzugter bei 3,5-4,0. Ist der PH-Wert nahe bei dem neutralen Wert von 7,0, so wird sehr wenig Aldehyd gebildet, liegt er nahe bei 1,0, so wird relativ viel Aldehyd gebildet. Die Einstellung des PH-Wertes ist allerdings in der Praxis auch von der Menge des zu fixierenden biologischen Materials abhängig. Bei größeren zu fixierenden Mengen werden auch größere Mengen von Aldehyden benötigt, so daß man dann den PH-Wert auf saurere Lösungen einstellt.

Das Fixativum nach der Erfindung kann in einer Lösung bereitgestellt werden. Es ist aber auch möglich, es in trockener Form, beispielsweise als Pulver, Tablette oder Beschichtung eines Behälters, bereitzustellen und es dann erst beim Endanwender durch Zugabe eines Lösungsmittels, wie Wasser, zu aktivieren. Hierdurch können u.a. Transportkosten reduziert werden.

Ein konkretes Ausführungsbeispiel verwendet eine Lösung mit 1 Gewichts% Hexamethylentetramin als Depotmittel sowie weitere Substanzen, wie eine zusätzliche Säure, die der Einstellung des PH-Wertes dient. Hier können wahlweise organische oder anorganische Säuren verwendet werden, wie z.B. Zitronensäure. Als weiterer Zusatzstoff kann Askorbinsäure eingesetzt werden, das primär als Antioxidations-Mittel dient. Weiter kann Ethylen Glykol zugesetzt werden, das als Vermittler zur Lipidenphase der Probe wie auch als Feuchtigkeitsspender dient. Stattdessen können wahlweise auch Sorbitol, Glyzerin, Propylen-Glykol und ähnliche Stoffe verwendet werden. Als weiterer Zusatzstoff kann ein Tensid als Benetzungshelfer zugefügt werden, wie z.B. Triton 200 oder andere nicht ionische Tenside. Schließlich können auch noch Duftstoffe zugefügt werden, wie z.B. Terpene mit Aldehydfunktion, wie z.B. Geraniol oder Citral, wobei diese Stoffe auch als Biozide wirken.

Beispiel:

Es wurde eine Lösung folgender Chemikalien in Gewichtsprozent gebildet, deren PH-Wert auf 3,0-4,0 eingestellt wurde:

1 % Hexamethylentetramin
1 % Zitronensäure
1 % Askorbinsäure

2 % Ethylen Glykol
0,05 % Tensid
0,01 % Geraniol
0,01 % Citral
Rest Wasser auf 100 %

Diese Lösung wurde bei Stuhlproben getestet und konservierte diese einwandfrei für 30 Tage. Für die Stuhluntersuchung wurden 3,5 ml Lösung verwendet. Lösungen mit Hexamethylentetramin in einer Konzentration von bis zu 1 % müssen nicht als Gefahrstoff gekennzeichnet werden. Weiter ist die für einen Erwachsenen gefährliche Dosis an Hexamethylentetramin 4 g. Die in den 3,5 ml Lösung enthaltene Menge an Hexamethylentetramin liegt somit extrem weit von der gefährlichen Konzentration entfernt. Die Lösung ist weder brennbar noch hochkorrosiv oder ätzend. Eine Absorbtion über die Haut oder die Atmungswege ist ausgeschlossen. Somit wird insgesamt eine Verbesserung der Arbeits- und Transportsicherheit gewährleistet.

Die oben angegebenen Mengen können je nach Anwendungsfall geändert werden. So ist beispielsweise der Wert von 1 Gewichts% Hexamethylentetramin zwar bevorzugt, weil bei dieser Menge keine gesetzliche Kennzeichnungspflicht als Gefahrenstoff besteht. Für manche Anwendungszwecke, bei denen größere Mengen an Fixativum benötigt werden, kann dieser Wert aber auch wesentlich erhöht werden, wobei dann die Lösung kennzeichnungspflichtig ist.

Auch der oben angegebene Wert von 1 Gewichts% Zitronensäure, die primär für die Einstellung des PH-Wertes verantwortlich ist, kann den Bedürfnissen angepaßt werden, um die oben beschriebene Gleichgewichtsreaktion in Richtung auf die Bildung von mehr Formaldehyd zu verschieben.

Auch die übrigen angegebenen Werte kann der Fachmann je nach gewünschten Eigenschaften ohne weiteres variieren. Auch sei darauf hingewiesen, daß nicht nur Wasser für den Rest in Frage kommt, sondern auch andere wässrige Lösungen oder sonstige geeignete Lösungsmittel, wie z.B. Alkohole, in Frage kommen .

Als Depotmittel kommen auch folgende Stoffe in Betracht:

Protectol HT von BASF mit

CAS Nr.: 4719-04-4

EINEC Nr.: 225-208-0

Mol Formel: $C_9H_{21}N_3O_3$

Mol Gew.: 219

Chemischer Name: 1,3,5-tris-(2-hydroxyethyl) - 1,3,5-hexahydrotriazine, 1,3,5-Triazine-1,3,5(2H,4H, 6H)-Triethanol

Protectol TD der BASF mit

CAS Nr.: 5395-50-6

EINEC Nr.: 226-408-0

Mol Formel: 262

Chemischer Name: 1,3,4,6-Tetrakis-hydroxymethyl -tetrahydro-imidazo(4,5)imidazole-2,5-dione, Tetramethylolacetylene diurea

Folgende Stoffe können ebenfalls als Depotmittel verwendet werden:

Glutaraldehyd, Glyoxal, Chloralhydrat, Propanal, Butanal, Ethanal, die jeweils mit $NH_3$ Komplexe bilden.

**Patentansprüche**

1.  Verwendung folgender Kombination von Stoffen als Fixativum zum Fixieren von biologischen Materialien:

- Hexamethylentetramin und
- eine Säure in solcher Menge, daß der PH-Wert des Fixativums auf 3,0 bis 7,0 eingestellt ist.

2.  Verwendung nach Anspruch 1, **dadurch gekennzeichnet, daß** der PH-Wert des Fixativums durch Zugabe der Säure auf 3,5-4,0 eingestellt ist.

3.  Verwendung nach Anspruch 1 oder 2, **dadurch gekennzeichnet, daß** die Säure Zitronensäure, Askorbinsäure, Essigsäure oder Ameisensäure ist.

4.  Verwendung nach einem der Ansprüche 1 bis 3, **dadurch gekennzeichnet,**
    **daß** das Fixativum zusätzlich mindestens einen der nachfolgenden Stoffe enthält:

    - ein Antioxidationsmittel, wie z.B. Askorbinsäure,
    - einen Feuchtigkeitsspender, wie z.B. Sorbitol, Glyzerin, Propylen-Glykol,
    - einen Benetzungshelfer, wie z.B. ein Tensid oder andere nicht ionische Tenside,
    - Duftstoffe, wie z.B. Terpene, Geraniol, Citral, die auch als Biozide wirken,

    wobei all diese Stoffe in Wasser, wässriger Lösung oder anderen geeigneten Lösungsmitteln gelöst sind.

5.  Verwendung nach Anspruch 4, **dadurch gekennzeichnet, daß** das Fixativum eine Lösung mit folgenden Komponenten in Gewichtsprozent enthält:

    | | |
    |---|---|
    | 1-15 % | Hexamethylentetramin |
    | 1-15 % | Zitronensäure |
    | 1-15 % | Askorbinsäure |
    | 2-15 % | Ethylen Glykol |
    | 0,05-5 % | Tensid |
    | 0,01-1 % | Geraniol |
    | 0,01-1 % | Citral |
    | Rest | Wasser, wässrige Lösung oder sonstige geeignete Lösungsmittel auf 100 %. |

6.  Verwendung nach einem der Ansprüche 1 bis 5, **dadurch gekennzeichnet, daß** das Fixativum eine Lösung mit folgenden Komponenten in Gewichtsprozenten enthält:

    | | |
    |---|---|
    | 1 % | Hexamethylentetramin |
    | 1 % | Zitronensäure |
    | 1 % | Askorbinsäure |
    | 2 % | Ethylen Glykol |
    | 0,05 % | Tensid |
    | 0,01 % | Geraniol |
    | 0,01 % | Citral |
    | Rest | Wasser, wässrige Lösung oder sonstige geeignete Lösungsmittel auf 100 %. |

7.  Verwendung nach einem der Ansprüche 1 bis 6, **dadurch gekennzeichnet, daß** das Fixativum wahlweise in Pulverform, Tablettenform, als Beschichtung eines Behälters oder in einer Lösung vorliegt.

**Claims**

1.  Use of the following combination of substances as a fixative for fixing biological materials:

    - hexamethylenetetramine and
    - an acid in such an amount that the PH-value of the fixative is adjusted to 3,0 to 7,0.

**2.** Use according to claim 1, **characterized in that** the PH-value of the fixative is adjusted to 3,5 to 4,0 by adding an acid.

**3.** Use according to claim 1 or 2, **characterized in that** the acid is citric acid, ascorbic acid, acetic acid or formic acid.

**4.** Use according to one of claims 1 to 3, **characterized in that** the fixative additionally contains at least one of the following substances:

- an antioxidation agent, for example ascorbic acid,
- a moisturizer, for example sorbitol, glycerol, propylene glycol,
- a wetting aid, for example a surfactant or other nonionic surfactants,
- fragrances, like for example terpenes, geraniol, citral, which also act as biocides,

where all of these substances are dissolved in water, an aqueous solution or another suitable solvent.

**5.** Use according to claim 4, **characterized in that** the fixative comprises a solution with the following components in percent by weight:

| | |
|---|---|
| 1-15 % | hexmethylenetetramine |
| 1-15 % | citric acid |
| 1-15 % | ascorbic acid |
| 2-15 % | ethylene glycol |
| 0,05-5 % | surfactant |
| 0,01-1 % | geraniol |
| 0,01-1 % | citral |

Remainder water, aqueous solution or other suitable solvents to 100 %.

**6.** Use according to one of claims 1 to 5, **characterized in that** the fixative comprises a solution with the following components in percent by weight:

| | |
|---|---|
| 1 % | hexamethylenetetramine |
| 1 % | citric acid |
| 1 % | ascorbic acid |
| 2 % | ethylene glycol |
| 0,05 % | surfactants |
| 0,01 % | geraniol |
| 0,01 % | citral |

Remainder water, aqueous solution or other suitable solvents to 100 %.

**7.** Use according to one of claims 1 to 6, **characterized in that** the fixative is, as desired, in powder form, tablet form, as a coating on a container or in a solution.

**Revendications**

**1.** Utilisation de la combinaison suivante de matières en tant que fixateur pour la fixation de matériaux biologiques :

- hexaméthylènetétramine, et
- un acide en des quantités telles que le pH du fixateur est ajusté dans l'intervalle allant de 3,0 à 7,0.

**2.** Utilisation selon la revendication 1, **caractérisée en ce que** le pH du fixateur est ajusté à 3,5-4,0, par addition de l'acide.

**3.** Utilisation selon la revendication 1 ou 2, **caractérisée en ce que** l'acide est l'acide citrique, l'acide ascorbique, l'acide acétique ou l'acide formique.

4. Utilisation selon l'une des revendications 1 à 3, **caractérisée en ce que** le fixateur contient en outre, au moins une des substances suivantes :

- un agent antioxydant, comme par exemple l'acide ascorbique,
- un humidifiant, comme par exemple le sorbitol, la glycérine, le propylèneglycol,
- un auxiliaire mouillant, comme par exemple un tensioactif ou d'autres tensioactifs non ioniques,
- des parfums, comme par exemple des terpènes, le géraniol, le citral, qui agissent également comme biocides,

fixateur dans lequel toutes ces substances sont dissoutes dans l'eau, dans un solvant aqueux ou dans d'autres solvants appropriés.

5. Utilisation selon la revendication 4, **caractérisée en ce que** le fixateur contient une solution avec les composants suivants, en pourcent en poids :

| | |
|---|---|
| 1-15 % | hexaméthylènetétramine |
| 1-15 % | acide citrique |
| 1-15 % | acide ascorbique |
| 2-15 % | éthylèneglycol |
| 0,05-5 % | tensioactif |
| 0,01-1 % | géraniol |
| 0,01-1 % | citral |

Reste eau, solution aqueuse ou autre solvant approprié pour faire 100 %.

6. Utilisation selon l'une des revendications 1 à 5, **caractérisée en ce que** le fixateur contient une solution avec les composants suivants, en pourcent en poids :

| | |
|---|---|
| 1 % | hexaméthylènetétramine |
| 1 % | acide citrique |
| 1 % | acide ascorbique |
| 2 % | éthylèneglycol |
| 0,05 % | tensioactif |
| 0,01 % | géraniol |
| 0,01 % | citral |

Reste eau, solution aqueuse ou autre solvant approprié pour faire 100 %.

7. Utilisation selon l'une des revendications 1 à 6, **caractérisée en ce que** le fixateur se présente au choix, sous forme pulvérulente, sous forme de comprimé, en tant que revêtement d'un récipient ou sous forme d'une solution.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3822183 A1
- DE 3824936 A1
- DE 4404544 A1
- GB 1440283 A